**Europäisches Patentamt**

**European Patent Office**

**Office européen des brevets**

(19)

(11) Veröffentlichungsnummer: **0 128 111 B1**

(12) **EUROPÄISCHE PATENTSCHRIFT**

(45) Veröffentlichungstag der Patentschrift:
25.01.89

(21) Anmeldenummer: 84710006.2

(22) Anmeldetag: 07.02.84

(51) Int. Cl.⁴: **B 60 N 1/08**

(54) **Längsverstellvorrichtung für Fahrzeugsitze mit einer motorgetriebenen Verstelleinrichtung und einer Längsführung.**

(30) Priorität: 01.06.83 DE 3319817
16.06.83 DE 3321930

(43) Veröffentlichungstag der Anmeldung:
12.12.84 Patentblatt 84/50

(45) Bekanntmachung des Hinweises auf die Patenterteilung:
25.01.89 Patentblatt 89/4

(84) Benannte Vertragsstaaten:
DE FR GB SE

(56) Entgegenhaltungen:
DD-A-71 677
DE-A-2 806 954
FR-A-2 446 740
US-A-4 355 778

(73) Patentinhaber: **C. Rob. Hammerstein GmbH,
Postfach 13 01 18 Merscheiderstrasse 167, D-5650
Solingen 13 (DE)**

(72) Erfinder: **Frohnhaus, Erst- Reiner, Hammerstrasse
13, D-5650 Solingen 11 (DE)**
Erfinder: **Becker, Burckhard, Dipl.- Ing.,
Obenkatternberg 25, D-5650 Solingen (DE)**

(74) Vertreter: **Bauer, Wulf, Dr., Wolfgang- Müller-
Strasse 12, D-5000 Köln 51 (Marienburg) (DE)**

EP 0 128 111 B1

## Beschreibung

Die Erfindung bezieht sich auf eine Längsverstellvorrichtung für Fahrzeugsitze:
- mit einer motorgetriebenen Verstelleinrichtung, die eine Antriebseinheit, zu der eine Antriebswelle und ein Ritzel gehören, und eine mit diesem Ritzel in Eingriff stehende Zahnstange aufweist und
- mit einer Längsführung aus zwei länglichen, ineinander geführten, gegeneinander verschiebbaren Schienen,
a. von denen eine Schiene, vorzugsweise die Bodenschiene, mit der Zahnstange verbunden ist und
b. von denen die andere Schiene die Antriebseinheit trägt.

Diese aus der US-A-4 355 778 bekannte Längsverstellvorrichtung mit elektromotorischem Antrieb und für Fahrzeugsitze, insbesondere Kraftfahrzeugsitze hat eine in Eingriffrichtung der Zähne von Zahnrad und Ritzel beweglich angeordnete Zahnstange. Die Antriebseinheit ist fest mit der Sitzschiene verbunden und hat einen parallel zur Antriebswelle vorspringenden Zapfen, der in eine unterhalb der Zahnstange ausgebildete Führungsrille greift und dadurch den Eingriff von Ritzel und Zahnstange sicherstellt.

Bei dieser bekannten Ausbildung einer Längsverstellvorrichtung ist ein Verklemmen nicht mit Sicherheit auszuschließen und dann unvermeidbar, wenn die Zahnstange größere Fertigungstoleranzen aufweist, da der Abstand zwischen der Antriebswelle und dem führenden Zapfen fest vorgegeben ist. Zudem sind Klappergeräusche auf Grund von Bewegungen der Zahnstange, die diese bei Beschleunigungen ausführt, nicht vermieden.

Aus der FR-A-2 446 740 ist eine Antriebsvorrichtung für eine Längsverstellvorrichtung bekannt, der Antrieb erfolgt jedoch nicht über ein Ritzel und eine Zahnstange, sondern mittels eines Triebstockes. Das Treibrad des Triebstockes ist in Eingriffsrichtung elastisch verschiebbar, um überhaupt eine Verstellbewegung zu ermöglichen. Die französische Offenlegungsschrift ist daher gattungsfremd, sie gibt keinen Hinweis bei einem Toleranzausgleich.

Hiervon ausgehend ist es Aufgabe der Erfindung, die geschilderten Nachteile der bekannten Längsverstellvorrichtung zu vermeiden und einen anderen Lösungsweg für die Sicherung des Eingriffs des Ritzels in die Zahnstange zu geben, indem eine größere Toleranzenausgleichende Längsverstellvorrichtung der eingangs genannten Art angegeben wird, die unabhängig von der Position des Ritzels gegenüber den Zahnstange stets dieselben Eingriffsbedingungen zwischen Ritzel und Zahnstange gewährleistet.

Diese Aufgabe wird ausgehend von der bekannten Längsverstellvorrichtung der eingangs genannten Art (US-A-4 355 778) dadurch gelöst, daß die Antriebseinheit in Eingriffsrichtung der Zähne von Zahnstange und Ritzel verschiebbar um eine Achse schwenkbar an der anderen Schiene gehalten ist und daß ein elastisches Teil, insbesondere eine Feder, zwischen der Antriebseinheit und der anderen Schiene vorgesehen ist, das das Ritzel in Eingriffstellung mit den Zähnen der Zahnstange vorbelastet.

Bei dieser Ausbildung der Längsverstellvorrichtung ist die Eingriffsbedingung und der Eingriffszustand von Ritzel und Zahnstange unabhängig von dem Ort, an dem sich das Ritzel auf der Zahnstange befindet, weil der Abstand der Antriebswelle und damit des Ritzels von einem Befestigungspunkt der Antriebseinheit an der anderen Schienem insbesondere von einer Schwenkachse, sowie die Kraft, mit der das Ritzel gegen die Zahnstange gedrückt wird, nicht von der örtlichen Lage des Ritzels auf der Zahnstange abhängen. Damit können auch größere Fertigungstoleranzen hinsichtlich der Schienen, insbesondere der mit der Zahnstange verbundenen Schiene und der Zahnstange selbst ausgeglichen werden. Zu diesen Fertigungstoleranzen werden auch Montagetoleranzen gerechnet, die bei der Anordnung der Längsverstellvorrichtung an der Bodengruppe eines Fahrzeugs auftreten.

In besonders vorteilhafter Ausbildung der Erfindung hat die Längsführung einen kanalförmigen, im Profil von den Schienen begrenzten Innenraum. In diesem Innenraum sind die Zahnstange und das Ritzel untergebracht. Diese Ausführung ermöglicht im Gegensatz zur bekannten Längsverstell-Vorrichtung eine geschützte und verletzungssichere Unterbringung der miteinander kämmenden Teile. Abdeckbleche, wie sie bei der bekannten Längsverstellvorrichtung vorgesehen sind, können entfallen, damit entfällt zusätzlicher Material- und Bearbeitungsaufwand, insbesondere zusätzliches Gewicht.

Weiterhin ist es vorteilhaft, wenn sich das Ritzel zwischen der Zahnstange und dem der Bodengruppe des Fahrzeugs zugeordneten Basisflansch der Bodenschiene befindet. In diesem Fall hindert die Zahnstange das Ritzel im Falle einer auf die Längsführung einwirkenden Trennkraft, nach oben ausweichen zu können. Die Zahnstange verstärkt somit die Ausreißfestigkeit der Längsverstellvorrichtung.

Weiterhin wird die Ausreißfestigkeit der Längsverstellvorrichtung dadurch wirkungsvoll erhöht, daß mit der Antriebseinheit eine Umgrifflasche verbunden ist, die die Zahnstange an ihrer vom Eingriffsbereich mit dem Ritzel abgewändten Fläche umgreift und, gegebenenfalls mit anderen Teilen der Antriebsvorrichtung, eine ringförmige Zugsicherung bildet. Dabei ist es vorteilhaft, wenn diese Umgrifflasche selbst nicht an der Zahnstange anliegt, sondern diese frei umgreift, damit die Eingriffsbedingungen, wie sie erfindungsgemäß durch die elastische Anordnung der Antriebseinheit erreicht werden, nicht beeinflußt werden.

In vorteilhafter Ausbildung hat die andere Schiene der Längsverstellvorrichtung ein Langloch, durch das die Antriebswelle gesteckt ist. Es weist in vorteilhafter Ausbildung Führungsflanken auf, die eine unerwünschte Querbewegung des Ritzels oder seiner Antriebswelle vermeiden. Dadurch wird die elastische Lagerung, insbesondere die Achse der Antriebseinheit, entlastet, da von außen einwirkende Kräfte, die die beiden Schienen gegeneinander verschieben wollen, direkt von den Führungsflächen aufgefangen werden. In vorteilhafter Ausbildung hat das Langloch weiterhin mindestens eine Anschlagfläche, vorzugsweise zwei Anschlagflächen, die die Bewegung der Antriebswelle und damit des Ritzels in Eingriffsrichtung begrenzen. Dadurch wird das Spiel, daß für die elastische Lagerung der Antriebseinheit zur Verfügung steht, begrenzt.

In bevorzugter Ausbildung ist der lichte Abstand des Ritzels von einem parallel zur Antriebswelle verlaufenden Flansch der zugehörigen anderen Schiene klein. Dadurch wird eine Aussteifung dieser anderen Schiene dahingehend erreicht, daß bei Einfedern des entsprechenden Flansches dieser an das Ritzel anschlägt, wodurch die Einfederbewegung nach kurzer Wegstrecke begrenzt wird.

Pro Fahrzeugsitz sind üblicherweise zwei Längsführungen zu beiden Seiten des Sitzes vorgesehen. Beide werden mit einer Antriebseinheit ausgerüstet. Dabei ist nur eine Antriebseinheit mit einem Motor ausgerüstet, die andere wird über eine Mitnehmerwelle mitgedreht. Bei einer derartigen Längsführung ist es besonders vorteilhaft, in unmittelbarer Nähe des Ritzels der ersten Antriebseinheit, die den Elektromotor und das Getriebe aufweist, an der Antriebswelle einen axial nach außen vorspringenden, unrunden und länglichen Zapfen vorzusehen, der von einer entsprechend geformten Öffnung formschlüssig umgriffen wird, die in einer quer zur Achsrichtung angeordneten Scheibe vorgesehen ist. Diese Scheibe ist mit einer längeren Welle, die insbesondere als Hohlwelle ausgebildet ist, verbunden. Letztere Welle ist drehfest mit dem Ritzel der zweiten Antriebseinheit verbunden. In kinematischer Umkehr ist es ebenfalls möglich, die mit der Öffnung versehene Scheibe an der motorgetriebenen, ersten Antriebseinheit anzuordnen und den Zapfen an der längeren, übertragenden Welle anzuordnen.

Durch diese Ausbildungen wird eine besonders einfache Übertragung der Drehmomente von der ersten Antriebseinheit zur zweiten Antriebseinheit erreicht. Montageungenauigkeiten, die aus unterschiedlichem Abstand der beiden Längsführungen voneinander, V-Stellung der Längsführungen zueinander, Anordnung der Längsführungen in unterschiedlich geneigten Ebenen usw. resultieren und unterschiedliche Positionen der beiden Antriebsvorrichtungen auf Grund unterschiedlicher Positionen innerhalb des elastischen Bewegungsbereichs werden ausgeglichen.

Weitere und Merkmale und Vorteile der Erfindung ergeben sich aus den übrigen Ansprüchen sowie drei Ausführungsbeispielen, die im folgenden, ohne daß eine Einschränkung hiermit bewirkt wird, näher erläutert und unter Bezugnahme auf die Zeichnung beschrieben werden. In dieser zeigen:

Fig. 1 einen Längsschnitt durch eine Längsverstellvorrichtung mit einer um eine Achse schwenkbaren Antriebseinheit und einer Zugfeder als elastisches Mittel,

Fig. 2 einen Längsschnitt entsprechend Figur 1 mit einem federbelasteten Stellkeil,

Fig. 3 einen Längsschnitt entsprechend Figur 1 für ein drittes Ausführungsbeispiel,

Fig. 4 eine perspektivische Darstellung einer Mitnehmerwelle für die Kupplung einer motorgetriebenen Antriebseinheit mit einer zweiten, nicht motorgetriebenen Antriebseinheit,

Fig. 5 eine perspektivische Darstellung entsprechend Figur 4 des rechten, längeren Teils der Mitnehmerwelle,

Fig. 6 eine Darstellung entsprechend Figur 5 einer anderen Ausführungsform, und

Fig. 7 eine Darstellung entsprechend Figur 5 einer wiederum anderen Ausführungsform.

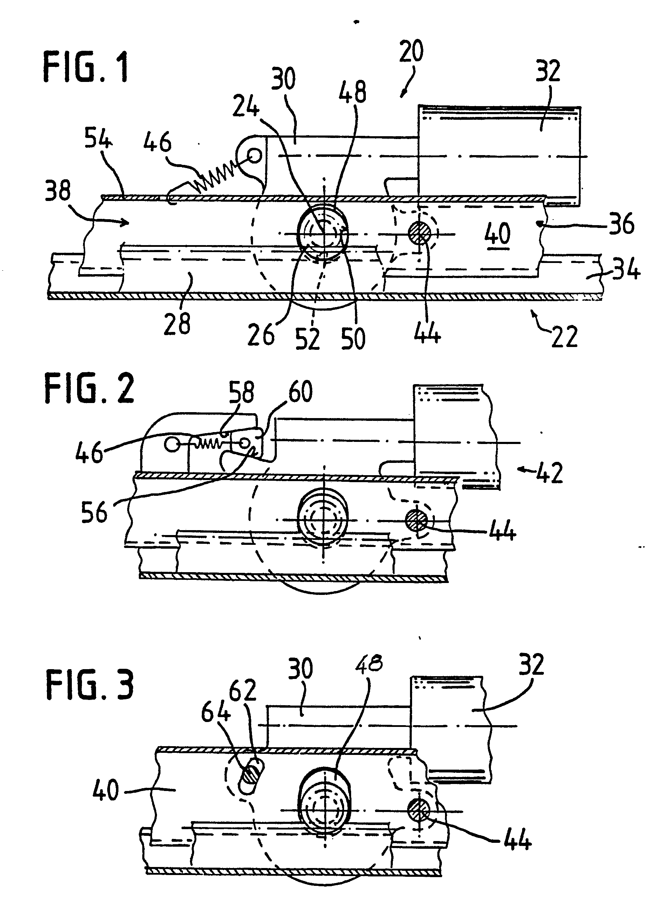

Die in Figur 1 gezeigte Längsverstellvorrichtung für Fahrzeugsitze besteht aus einer Verstelleinrichtung 20 und einer Längsführung 22. Die Verstelleinrichtung 20 umfaßt ihrerseits eine Antriebswelle 24 und ein auf dieser angeordnetes Ritzel 26, sowie eine Zahnstange 28. Im gezeigten Ausführungsbeispiel gehören zur Verstelleinrichtung 20 weiterhin ein Getriebe 30 und ein Elektromotor 32.

Die Längsführung 22 wird in bekannter Weise von zwei länglichen, ineinander geführten und gegeneinander verschiebbaren Schienen 34, 36 gebildet. Diese sind in den Figuren im wesentlichen nur angedeutet, ihre tatsächliche Ausführung ergibt sich beispielsweise aus der DE-A-3 143 431 der Anmelderin. Diese Längsführungen haben einen relativ großen, in etwa rechteckförmigen Innenraum 38. Andere Ausbildungen der Längsführung sind aber dadurch nicht ausgeschlossen, die Erfindung läßt sich auch beispielsweise an Längsführungen ausbilden, die nur einen geringen Innenraum 38 aufweisen, siehe z. B. die US-A- 4 355 778.

Wie Figur 1 zeigt, ist die Zahnstange 28 mit der einen Schiene 34, im folgenden Bodenschiene 34 genannt, fest verbunden. Sie steift dadurch diese Bodenschiene 34 vorteilhaft aus, erhöht somit die Ausreißfestigkeit der Längsführung 22. An einem seitlichen, im wesentlichen vertikal verlaufenden Schenkel 40 der anderen Schiene 36, im folgenden Sitzschiene 36 genannt, ist die

Antriebseinheit 42 der Verstelleinrichtung angeordnet, die die bewegten Teile der Verstelleinrichtung 20 umfaßt. Sie ist um eine Achse 44 schwenkbar an der Sitzschiene 36 angelenkt und wird mittels eines elastischen Mittels, das als Schraubenzugfeder 46 ausgebildet ist, in Gegenrichtung zum Uhrzeigersinn um die Achse 44 vorbelastet. Dadurch wird das Ritzel 26, das zwischen Achse 44 und Feder 46 angeordnet ist, in Eingriff mit den Zähnen der Zahnstange 28 gehalten. Das Ritzel 26 bzw. die Antriebswelle 24 durchgreifen ein Langloch 48 im Schenkel 40, das einerseits seitliche Führungsflanken 50 und andererseits zwei Anschlagflächen 52 aufweist. Die Führungsflanken 50 halten die Antriebswelle 24 bzw. das Ritzel 26 auf einem Kreisbogen um die Achse 44 und fangen Kräfte auf, die bei einer in Verschieberichtung der Längsführung 22 wirkenden Belastung auftreten, ohne daß diese Kräfte die Achse 44 belasten. Durch die Anschlagflächen 52 wird der Schwenkbereich der Antriebseinheit 42 um die Achse 44 in beiden Schwenkrichtungen begrenzt.

Zwischen der Oberseite des Ritzel 26 und der Unterkante eines Basisflansches 54 der Sitzschiene bleibt relativ wenig Spiel, hier weniger als zwei oder vorzugsweise gar ein Millimeter frei. Das Ritzel 26 kann dadurch praktisch nicht außer Eingriff mit der Zahnstange 28 gelangen, weiterhin begrenzt diese Anordnung das Einfedern der Sitzschienenschenkel nach innen. Der Abstand zwischen Achse 44 und Antriebswelle 24 liegt vorzugsweise bei zwei bis sechs Zentimetern.

Im Gegensatz zum Ausführungsbeispiel nach Figur 1 ist das elastische Mittel im Ausführungsbeispiel nach Figur 2 geändert. Es sind zwei Schrägflächen 56, 58 vorgesehen, von denen eine, die Schrägfläche 56, mit der Antriebseinheit 42 verbunden ist, während die andere Schrägfläche 58 an einem fest mit der Sitzschiene 36 verbundenen Arm ausgebildet ist. Zwischen diesen Schrägflächen 56, 58 befindet sich ein Keil 60, der vorzugsweise aus Kunststoff gefertigt ist und mittels einer Feder so nach links (in der Figur) gezogen wird, daß die Schrägflächen 56, 58 voneinander weggedrückt werden. Dadurch wird der Eingriff des Ritzels 26 in die Zahnstange 28 elastisch aufrecht erhalten. Der Keil wird nach rechts (in der Figur) gegen die Kraft der Zugfeder 46 gedrückt, wenn das Ritzel 26 nach oben ausweichen muß.

Im Ausführungsbeispiel nach Figur 3 schließlich ist eine zusätzliche Führung mit einem Langloch 62 und einem Stift 64 vorgesehen, im gezeigten Ausführungsbeispiel springt der Stift 64 am Getriebe 30 vor und greift in das im Schenkel 40 vorgesehene Langloch 62. Dadurch wird der Schwenkwinkel begrenzt, weiterhin werden in Längsrichtung der Längsführung 22 wirkende Kräfte aufgefangen. Dadurch kann auf Führungsflanken 50 und auf Anschlagflächen 52 verzichtet werden.

Als elastisches Mittel ist im Ausführungsbeispiel nach Figur 3 (nicht dargestellt) eine Schenkelfeder vorgesehen, die die Wirkung der Feder 46 im Ausführungsbeispiel nach Figur 1 übernimmt.

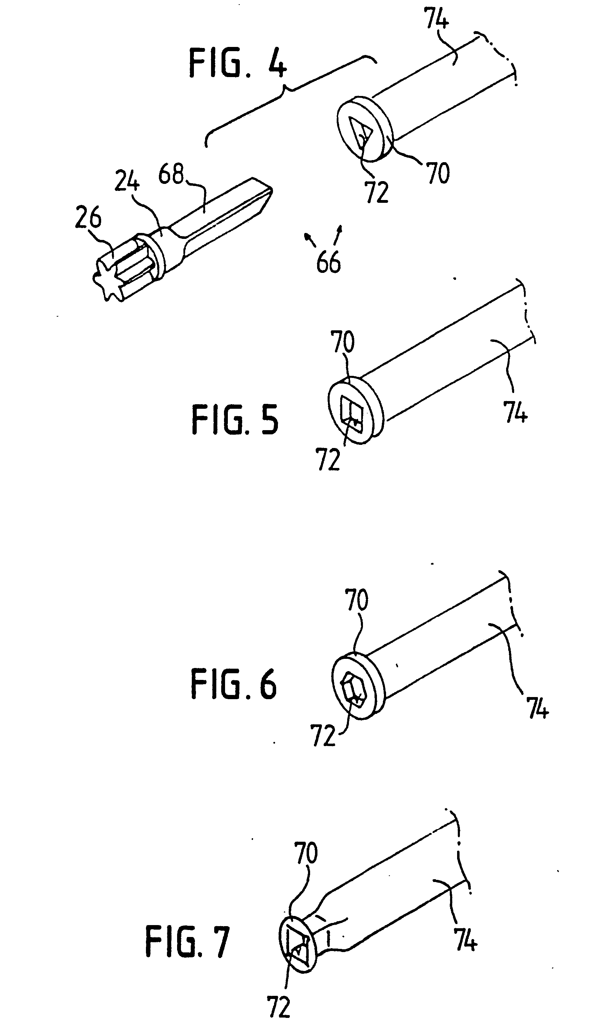

In den Ausführungsbeispielen nach Figur 4 bis 7 sind mögliche Ausbildungen einer Mitnehmerwelle 66 gezeigt, wie sie für eine weitgehend spielfreie, dennoch gelenkige und einen Längenspielraum aufweisende Übertragung der Drehmomente von einer ersten, motorisch angetriebenen Antriebseinheit auf eine zweite, nicht mit Motor ausgerüstete Antriebseinheit benutzt wird. Wie Figur 4 zeigt, geht die Antriebswelle in unmittelbarer Nähe des motorisch angetriebenen Ritzels 26 in einen dreikantförmigen, länglichen Zapfen 68 über. Dieser wird formschlüssig von einer Scheibe 70 umgriffen, die eine ebenfalls dreieckförmige Öffnung 72 aufweist. Hinter dieser befindet sich eine Ausnehmung, die insbesondere dadurch gebildet wird, daß das rechte Teilstück 74 der Mitnehmerwelle 66 durch ein Rohr gebildet ist, so daß der Zapfen in Längsrichtung auf seiner gesamten Länge in die Öffnung 72 eintauchen kann oder nicht. Die Länge des Zapfens 68 bestimmt das Maß, innerhalb dessen Längentoleranzen ausgeglichen werden können. Da die Scheibe 70 relativ schmal ausgebildet ist, kann sie Kippstellungen gegenüber dem Zapfen 68 einnehmen, so daß eine gelenkige Drehverbindung erreicht wird.

Die Ausführungsbeispiele nach den Figuren 5 bis 7 zeigen unterschiedliche Ausbildungen von Öffnungen 72 der Scheibe 70. Anstelle eines gleichseitigen Dreiecks ist die Öffnung 72 im Ausführungsbeispiel nach Figur 5 ein Quadrat, im Ausführungsbeispiel nach Figur 6 ein Sechseck und im Ausführungsbeispiel nach Figur 7 ist die Öffnung 72, die ebenfalls ein Quadrat ist, durch Verjüngen des rechten Teilbereichs 74 hergestellt. Als besonders vorteilhaft haben sich Zapfen 68 mit relativ vielen Zähnen, sogenannte Kerbverzahnungen oder Vielkeilwellen, erwiesen. Bei ihnen besteht im Gegensatz zu den Ausführungsbeispielen nach den Figuren 4 bis 7 der Vorteil, daß die Kippbewegung zwischen Zapfen 68 und rechtem Teilbereich 74 unabhängig von der räumlichen Lage der Winkelbewegung ist. Dagegen sind die Verhältnisse einer Kippbewegung beispielsweise nach Figur 4 um eine Dreiecksseite als Kippachse oder eine dreißig Grad hierzu gedrehte Kippachse unterschiedlich.

Die Anordnung einer Scheibe 70 an einem Endbereich eines rohrförmigen rechten Teilbereichs 74 entsprechend den Figuren 4 bis 6 ist vorteilhaft, grundsätzlich kann die Öffnung 72 aber auch durch einen Rand begrenzt werden, der nicht durch eine Scheibe 70 gebildet ist und beispielsweise durch Einbiegen entsprechend eingeschnittener Endbereiche eines Rohres oder dergleichen gefertigt ist.

Die Zahnstange 28 ist in den Ausführungsbeispielen als geradlinig verlaufende Stange eingereicht, sie kann aber auch einen gekrümmten oder bogenförmigen Verlauf haben, zum Beispiel in einer Verstellvorrichtung für die Sitzneigung.

Der bereits angesprochene, möglichst kleine lichte Abstand des Ritzels 26 von einem mit der Sitzschiene 36 verbundenen Teil kann alternativ zu der in Figur 1 gezeigten Lösung auch dadurch realisiert werden, daß an der Sitzschiene 36 ein spezieller, parallel zum Flansch 54 verlaufender Steg vorspringt, der das Ritzel 26 knapp übergreift, andererseits kann auch zwischen dem Flansch 54 und dem Ritzel 26 ein streifenförmiges Material gelegt sein, um den Abstand zwischen Ritzel 26 und Flansch 54 zu verkleinern.

## Patentansprüche

1. Längsverstellvorrichtung für Fahrzeugsitze:
- mit einer motorgetriebenen Verstelleinrichtung (20), die eine Antriebseinheit (42), zu der eine Antriebswelle (24) und ein Ritzel (26) gehören, und eine mit diesem Ritzel (26) in Eingriff stehende Zahnstange (28) aufweist, und
- mit einer Längsführung (22) aus zwei länglichen, ineinander geführten, gegeneinander verschiebbaren Schienen (34, 36),
a. von denen eine Schiene, vorzugsweise die Bodenschiene (34), mit der Zahnstange (28) verbunden ist und
b. von denen die andere Schiene (z. B. 36) mit der Antriebseinheit (42) verbunden ist,

dadurch gekennzeichnet, daß die Antriebseinheit (42) in Eingriffsrichtung der Zähne von Zahnstange (28) und Ritzel (26) verschiebbar um eine Achse (44) schwenkbar an der anderen Schiene (36) gehalten ist und daß ein elastisches Mittel, insbesondere eine Feder (46), zwischen der Antriebseinheit (42) und der anderen Schiene (36) vorgesehen ist, das das Ritzel (26) in Eingriffstellung mit den Zähnen der Zahnstange (28) vorbelastet.

2. Längsverstellvorrichtung nach Anspruch 1, dadurch gekennzeichnet, daß die Längsführung (22) einen kanalförmigen, im Profil von den Schienen (34, 36) begrenzten Innenraum (38) aufweist und daß die Zahnstange (28) und das Ritzel (26) sich innerhalb dieses Innenraums (38) befinden.

3. Längsverstellvorrichtung nach Anspruch 1 oder 2, dadurch gekennzeichnet, daß sich das Ritzel (26) zwischen der Zahnstange (28) und einem Basisflansch der zugehörigen Schiene (34) befindet.

4. Längsverstellvorrichtung nach einem der Ansprüche 1 bis 3, dadurch gekennzeichnet, daß eine Umgrifflasche vorgesehen ist, die die Zahnstange (28) an ihrer vom Ritzel (26) abgewandten Seite vorzugsweise frei umgreift und gegebenenfalls mit Teilen der Antriebseinheit (42) einen geschlossenen Ring um die Zahnstange (28) bildet.

5. Längsverstellvorrichtung nach einem der Ansprüche 1 bis 4, dadurch gekennzeichnet, daß die andere Schiene (36) ein Langloch (48) aufweist, durch das die Antriebswelle (24) verläuft, und daß vorzugsweise dieses Langloch (48) Führungsflanken (50) für die Antriebswelle (24) und/oder Anschlagflächen (52) für die Begrenzung der Bewegung der Antriebswelle (24) in mindestens einer Schwenkrichtung aufweist.

6. Längsverstellvorrichtung nach einem der Ansprüche 1 bis 5, dadurch gekennzeichnet, daß der lichte Abstand des Ritzels (26) zu einem mit der zugehörigen anderen Schiene (36) verbundenen Teil, insbesondere einem Flansch (54) dieser anderen Schiene (36), möglichst klein ist, insbesondere drei, vorzugsweise einen Millimeter nicht übersteigt.

7. Längsverstellvorrichtung nach einem der Ansprüche 1 bis 6, dadurch gekennzeichnet, daß neben dem Ritzel (26) eine achsgleiche Kreisscheibe vorzugsweise frei drehbar angeordnet ist, deren Außendurchmesser etwas größer ist als der Außendurchmesser des Ritzels (26).

8. Längsverstellvorrichtung nach einem der Ansprüche 1 bis 7 mit zwei Längsführungen (22), die jeweils mit einer Antriebseinheit (42) ausgerüstet sind, wobei nur eine Antriebseinheit (42) einen Elektromotor (32) aufweist und diese Antriebseinheit (42) mit derzweiten Antriebseinheit über eine Mitnehmerwelle (66) verbunden ist, dadurch gekennzeichnet, daß in unmittelbarer Nähe des Ritzels (26) der ersten Antriebseinheit (42), die den Elektromotor (32) aufweist, die Antriebswelle (24) einen axialen, unrunden, länglichen Zapfen (68) aufweist, der von einem eine entsprechend geformte Öffnung (72) aufweisenden, quer zur Achsrichtung angeordneten, flachen Rand, vorzugsweise einer Scheibe (70) umgriffen wird, welche über eine längere Welle (rechtes Teilstück 74), insbesondere Hohlwelle, mit dem Ritzel der zweiten Antriebseinheit verbunden ist.

9. Längsverstellvorrichtung nach Anspruch 8, dadurch gekennzeichnet, daß der Zapfen (68) eine möglichst Vielzahnige, runde Querschnittsform, insbesondere eine Kerbverzahnung, aufweist.

## Claims

1. A longitudinal adjusting arrangement for vehicle seats:
- with a power-operated adjusting device (20), featuring a drive unit (42) which includes a drive shaft (24) and a pinion (26) and also a toothed rack (28) in which said pinion (26) engages, and
- with a longitudinal guide (22) comprising two elongated, interlocking rails (34, 36), which can be slid back and forth in relation to one another;
a. of these two rails, one, preferably the floor rail (34), is attached to the toothed rack (28), and

b. the drive unit (42) is mounted on the other of the two rails (e.g. 36);

characterized by the fact that the drive (42) unit is designed to be movable in the direction of engagement of the teeth of the toothed rack (28) and the pinion (26), swivelling on an axle (44) mounted in the other rail (36); and by the fact that an elastic component, in particular a spring (46), which exerts a tension pressing the pinion (26) against the teeth of the toothed rack (28) in the engaged position, is fitted between the drive unit (42) and the other rail (36).

2. Longitudinal adjusting arrangement as claimed in Claim 1, characterized by the fact that the longitudinal guide (22) has a channel-shaped interior area (38), enclosed by the sections of the rails (34, 36), and by the fact that the toothed rack (28) and the pinion (26) are located within this interior area (38).

3. Longitudinal adjusting arrangement as claimed in Claims 1 or 2, characterized by the fact that the pinion (26) is located between the toothed rack (28) and a base flange of the rail (34) on which the toothed rack (28) is mounted.

4. Longitudinal adjusting arrangement as claimed in Claims 1 through 3, characterized by the fact that a wrap-around bracket is fitted which wraps around the side of the toothed rack (28) facing away from the pinion (26), preferably without touching the toothed rack, and forming, if necessary in combination with other components of the drive unit (42), a closed ring around the toothed rack (28).

5. Longitudinal adjusting arrangement as claimed in any of the Claims 1 through 4, characterized by the fact that the other rail (36) has a longitudinal hole (48) in it, in which the drive shaft (24) rests, and by the fact that this longitudinal hole (48) has, preferably, guide surfaces (50) for the drive shaft (24) and/or stop surfaces (52) to limit the travel of the drive shaft (24) in at least one direction of travel.

6. Longitudinal adjusting arrangement as claimed in any of the Claims 1 through 5, characterized by the fact that the clearance between the pinion (26) and a component connected with the other rail (36) of the arrangement, in particular a flange (54) of this other rail (36), is as small as possible, and that, in particular, this clearance does not exceed three millimeters and preferably does not exceed one millimeter.

7. Longitudinal adjusting arrangement as claimed in any of the Claims 1 through 6, characterized by the fact that a circular disk is located next to the pinion (26), preferably in such a way that it can rotate freely, said circular disk having the same axis as the pinion (26) and a slightly larger outside diameter than that of the pinion (26).

8. Longitudinal adjusting arrangement as claimed in any of the Claims 1 through 7, with two longitudinal guides (22), each of which is fitted with a drive unit (42); only one of these drive units (42) is fitted with an electric motor (32), and this drive unit (42) is connected with the second drive unit via a connecting drive shaft (66); characterized by the fact that there is a non-round, longitudinal pin (68) projecting axially from the end of the drive shaft (24) of the first drive unit (42), namely the drive unit (42) fitted with the electric motor (32), abutting the pinion (26), and by the fact that said pin (68) rests snugly in an correspondingly shaped opening (72), preferably the opening in a disk (70), said opening (72) being connected with the pinion of the second drive unit via a longer shaft (righthand portion of the connecting drive shaft, 74), in particular a hollow shaft.

9. Longitudnal adjusting arrangement as claimed in Claim 8, characterized by the fact that the pin (68) has a circular cross-section featuring as many teeth as possible, in particular serrated teeth.

**Revendications**

1. Mécanisme de déplacement longitudinal pour sièges de véhicules:
- ayant un dispositif de déplacement (20) actionné par moteur qui dispose d'une unité d'entraînement (42) dont font partie un arbre d'entraînement (24) et un pignon (26) et d'une crémaillère (28) qui s'engrène avec ce pignon (26) et
- ayant un guidage longitudinal (22) constitué de deux coulisses (34, 36) emboîtées l'une dans l'autre et pouvant être rapprochées l'une de l'autre
a. dont une coulisse, de préférence la coulisse au sol (34), est reliée à la crémaillère (28) et
b. dont l'autre coulisse (p. ex. 36) est reliée à l'unité d'entraînement (42)

caractérisé par le fait que l'unité d'entraînement (42) dans le sens d'engrènement des dents de la crémaillère (28) et du pignon (26) peut être maintenue décalée et orientable autour d'un axe (44) sur l'autre coulisse (36) et par le fait qu'un moyen élastique, à savoir un ressort (46), est prévu entre l'unité d'entraînement (42) et autre coulisse (36), moyen qui précontraint le pignon (26) dans la position d'engrènement avec les dents de la crémaillère (28).

2. Mécanisme de déplacement longitudinal selon revendication 1, caractérisé par le fait que le guidage longitudinal (22) présente un espace intérieur (38) en forme de canal limité dans le profil par les coulisses (34, 36) et par le fait que la crémaillère (28) et le pignon (26) se trouvent dans cet espace intérieur (38).

3. Mécanisme de déplacement longitudinal selon revendication 1 ou 2, caractérisé par le fait que le pignon (26) se trouve entre la crémaillère (28) et une bride de base de la coulisse (34) correspondante.

4. Mécanisme de déplacement longitudinal selon une des revendications 1 à 3, caractérisé par le fait qu'une languette est prévue laquelle serre de préférence librement la crémaillère (28) sur son côté opposé au pignon (26) et qui forme éventuellement avec des éléments de l'unité d'entraînement (42) une bague fermée autour de la crémaillère (28).

5. Mécanisme de déplacement longitudinal selon une des revendications 1 à 4, caractérisé par le fait que l'autre coulisse (36) présente un trou oblong (48) à travers lequel passe l'arbre d'entraînement (24) et par le fait que ce trou oblong (48) présente de préférence des flancs de guidage (50) pour l'arbre d'entraînement (24) et/ou des surfaces de butée (52) pour limiter le mouvement de l'arbre d'entraînement (24) dans un sens d'orientation au moins.

6. Mécanisme de déplacement longitudinal selon une des revendications 1 à 5, caractérisé par le fait que l'écartement intérieur du pignon (26) par rapport à une pièce reliée à l'autre coulisse (36) correspondante, notamment une bride (54) de cette autre coulisse (36), soit si possible petit et qu'il ne dépasse pas trois et de préférence un millimètre.

7. Mécanisme de déplacement longitudinal selon une des revendications 1 à 6, caractérisé par le fait qu'un disque à axe égal à rotation de préférence libre soit disposé à côté du pignon (26) et dont le diamètre extérieur est un peu plus grand que le diamètre extérieur du pignon (26).

8. Mécanisme de déplacement longitudinal selon une des revendications 1 à 7 avec deux guidages longitudinaux (22) respectivement équipés d'une unité d'entraînement (42), où seule une unité d'entraînement (42) dispose d'un moteur électrique (32) et où cette unité d'entraînement (42) est, reliée avec la deuxième unité d'entraînement par un arbre entraîneur (66), caractérisé par le fait que, à proximité immédiate du pignon (26) de la première unité d'entraînement (42) qui dispose du moteur électrique (32), l'arbre d'entraînement (24) présente un tourillon (68) axial, ovale et oblong qui est entouré par un bord plat, de préférence un disque (70), à disposition perpendiculaire par rapport au sens de l'axe et en direction d'une ouverture (72) de forme adéquate, disque qui est relié par un arbre plus long (élément droit 74), notamment un arbre creux, au pignon de la deuxième unité d'entraînement.

9. Mécanisme de déplacement longitudinal selon la revendication 8, caractérisé par le fait que le tourillon (68) présente une section ronde et si possible à dents multiples, notamment une cannelure.

FIG. 1

FIG. 2

FIG. 3

FIG. 4

74

24 68

26

72 70

66

FIG. 5

70

72 74

FIG. 6

70

72 74

FIG. 7

70

72 74